# EUROPÄISCHE PATENTANMELDUNG

(11) **EP 3 291 094 A1**
(43) Veröffentlichungstag der Anmeldung: **07.03.2018**
(21) Anmeldenummer: 16186314.7
(22) Anmeldetag: 30.08.2016
(51) Int. Cl.: G06F 11/30, G06F 11/07, G06F 11/34, G06F 21/50

(54) **PROZESSORSYSTEM UND VERFAHREN ZUR ÜBERWACHUNG VON PROZESSOREN**

(71) Anmelder: Airbus Defence and Space GmbH, 82024 Taufkirchen (DE)
(72) Erfinder: FREITAG, Johannes, 82008 Unterhaching (DE); GEIGER, Dietmar, 89075 Ulm (DE); KOPPENHÖFER, Bernd, 89075 Ulm (DE); UHRIG, Sascha, 85653 Dürrnhaar (DE); GAPP, Max, 89134 Blaustein (DE)
(74) Vertreter: Isarpatent

(57) **Zusammenfassung**

Ein Prozessorsystem umfasst mindestens einen Anwendungsprozessor, welcher mindestens einen Prozessorkern und eine Vielzahl von Hardwareleistungszählern aufweist, und einen Überwachungsprozessor, welcher mit dem mindestens einem Anwendungsprozessor über eine Datenübertragungsschnittstelle gekoppelt ist. Der Überwachungsprozessor weist zum einen eine Nachschlagetabelle auf, in welcher Sollwertleistungsprofile des zeitlichen Verlaufs von Leistungsereignissen mindestens eines der Vielzahl von Hardwareleistungszählern für eine auf dem mindestens einem Anwendungsprozessor auszuführende und zu überwachende Anwendung gespeichert sind. Zum anderen weist der Überwachungsprozessor eine Auswertelogik auf, welche mit der Nachschlagetabelle verbunden und dazu ausgelegt ist, den zeitlichen Verlauf von Leistungsereignissen des mindestens einen der Vielzahl von Hardwareleistungszählern während der Ausführung der zu überwachenden Anwendung auf dem mindestens einen Anwendungsprozessor aufzuzeichnen und mit den in der Nachschlagetabelle gespeicherten Sollwertleistungsprofilen zu vergleichen.

## Beschreibung

### TECHNISCHES GEBIET DER ERFINDUNG

Die vorliegende Erfindung betrifft ein Prozessorsystem, insbesondere mit einem Mehrkernprozessor, sowie ein Verfahren zur Überwachung von Prozessoren, insbesondere für eine Anwendung in kritischen Systemen.

### TECHNISCHER HINTERGRUND

Auch wenn die hierin beschriebenen Prozessorsysteme universell einsetzbar sind, insbesondere in verschiedenen Typen von Fahrzeugen, werden die Prinzipien und Arbeitsweisen der Prozessorsysteme sowie die zugrunde liegende Problematik in Bezug auf ein Flugzeug näher erläutert. Prinzipiell kann die vorliegende Erfindung jedoch auch in anderen Luftfahrzeugen sowie in Wasserfahrzeugen, Schienenfahrzeugen, Raumfahrzeugen oder dergleichen genutzt werden, die zum Transport von Personen geeignet sind. Weiterhin kann die vorliegende Erfindung auch in stationären Einsatzgebieten Anwendung finden, wie beispielsweise in sicherheitsbezogenen Systemen, die der Norm IEC61508/IEC61511 genügen müssen, gemäß derer elektrische, elektronische oder programmierbare elektronische Komponenten des Systems, deren Ausfall ein maßgebliches Risiko für Mensch, Ausrüstung oder Umwelt bedeuten kann, sicherheitsgerichtete Konstruktionsprinzipien einhalten müssen.

Mehrkernprozessoren bieten kosteneffiziente, skalierbare und energieeffiziente Rechenleistung für eingebettete Systeme. Neben der effizienten Nutzung verfügbarer paralleler Rechenressourcen muss darauf geachtet werden, dass nichtfunktionale Anforderungen, insbesondere im Bereich der Echtzeitfähigkeit, der Ausfallsicherheit, der Beachtung von Energie-/Verlustleistungsgrenzen, der Fehlertoleranz, dem Schutz vor Datenmanipulation und der Angriffssicherheit, bei einem Einsatz in kritischen Zielanwendungen wie Fahrerassistenzsystemen, Industrieautomatisierung oder Medizintechnik eingehalten werden können.

Bei einer Ausführung sicherheitsrelevanter Anwendungen neben anderen Anwendungen auf Mehrkernprozessoren sollten die Latenzzeiten für den Zugriff auf Daten bei der Ausführung der Anwendungen so gering wie möglich sein. Die Streuung dieser Latenzzeiten sollte in einem engen Rahmen gehalten werden, da für die Planung von sicherheitsrelevanten Anwendungen in einem System immer vom schlechtest denkbaren Fall ("worst case scenario") ausgegangen werden muss. Eine gezielte Optimierung für Register, Caches und Speicheranbindung ist daher unabdingbar.

Die Druckschrift US 2014/0229956 A1 offenbart ein Mehrprozessorkernsystem mit verteilten Prozessorkernen und darauf ausgeführten Ressourcenmonitoren, wobei bei bei einer durch einen der Ressourcenmonitore angezeigten Ressourcenüberschreitung einer der auf einem ersten Prozessorkern ausgeführten Anwendung die Ressourcenzuteilung für eine auf einem zweiten Prozessorkerne ausgeführte Anwendung eingeschränkt werden kann.

Die Druckschrift US 2012/0151276 A1 offenbart ein Computerüberwachungssystem, in welchem verschiedene Leistungsparameter abgerufen und statistisch analysiert werden, um Abweichungen von einem Normverhalten zu identifizieren, was auf eine Verschlechterung der Leistungsfähigkeit und ein drohendes Versagen des Computers hindeutet.

### ZUSAMMENFASSUNG DER ERFINDUNG

Eine der Aufgaben der Erfindung besteht nun darin, Lösungen für die Überwachung von auf Prozessoren ablaufenden Anwendungen zu finden, die zeitliche Anomalien von Anwendungen erkennen und diesen entgegenwirken können. Insbesondere ist es eine der Aufgaben der Erfindung, sicherheitsrelevante Anwendungen für ein zu überwachendes System kontinuierlich auf ein Fehlverhalten hin zu überprüfen und im Rahmen von Sicherheitsvorgaben die Einhaltung von Verhaltens- und Funktionalitätsschranken solcher sicherheitsrelevanter Anwendungen zu gewährleisten.

Diese und andere Aufgaben werden durch ein Prozessorsystem mit den Merkmalen des Anspruchs 1, ein Avioniksystem mit den Merkmalen des Anspruchs 10, und ein Verfahren zur Überwachung eines Anwendungsprozessors mit den Merkmalen des Anspruchs 12 gelöst.

Demgemäß umfasst gemäß einem ersten Aspekt der Erfindung ein Prozessorsystem mindestens einen Anwendungsprozessor, welcher mindestens einen Prozessorkern und eine Vielzahl von Hardwareleistungszählern aufweist, und einen Überwachungsprozessor, welcher mit dem mindestens einem Anwendungsprozessor über eine Datenübertragungsschnittstelle gekoppelt ist. Der Überwachungsprozessor weist zum einen eine Nachschlagetabelle auf, in welcher Sollwertleistungsprofile des zeitlichen Verlaufs von Leistungsereignissen mindestens eines der Vielzahl von Hardwareleistungszählern für eine auf dem mindestens einem Anwendungsprozessor auszuführende und zu überwachende Anwendung gespeichert sind.

Zum anderen weist der Überwachungsprozessor eine Auswertelogik auf, welche mit der Nachschlagetabelle verbunden und dazu ausgelegt ist, den zeitlichen Verlauf von Leistungsereignissen des mindestens einen der Vielzahl von Hardwareleistungszählern während der Ausführung der zu überwachenden Anwendung auf dem mindestens einen Anwendungsprozessor aufzuzeichnen und mit den in der Nachschlagetabelle gespeicherten Sollwertleistungsprofilen zu vergleichen.

Gemäß einem zweiten Aspekt der Erfindung umfasst ein Avioniksystem für ein Flugzeug, insbesondere ein Passagierflugzeug, ein Frachtflugzeug oder ein Militärflugzeug, mindestens ein Prozessorsystem gemäß dem ersten Aspekt der Erfindung. Derartige Avioniksysteme können beispielsweise Flugkontrollsysteme, Flugsteuerungssysteme, Navigationssysteme, Flugzeugkommunikationssysteme, Flugsensorsysteme und/oder Flugmissionssysteme umfassen.

Gemäß einem dritten Aspekt der Erfindung umfasst ein Verfahren zur Überwachung eines Anwendungsprozessors die Schritte des Ausführens von mindestens einer zu überwachenden Anwendung auf einem Anwendungsprozessor, welcher mindestens einen Prozessorkern aufweist, des Aufzeichnens des zeitlichen Verlaufs von Leistungsereignissen für die mindestens einer zu überwachenden Anwendung mit einer Vielzahl von Hardwareleistungszählern, des Übertragens der aufgezeichneten zeitlichen Verläufe von Leistungsereignissen an einen Überwachungsprozessor, und des Vergleichens des aufgezeichneten zeitlichen Verlaufs von Leistungsereignissen des mindestens einen der Vielzahl von Hardwareleistungszählern während der Ausführung der zu überwachenden Anwendung mit in einer Nachschlagetabelle des Überwachungsprozessors gespeicherten Sollwertleistungsprofile des zeitlichen Verlaufs von Leistungsereignissen mindestens eines der Vielzahl von Hardwareleistungszählern.

Eine der der vorliegenden Erfindung zugrunde liegenden Ideen besteht darin, die eingebauten Ereignisszähler in modernen Prozessoren zu nutzen, um unterschiedliche interne Leistungsereignisse bei einer Ausführung einer Anwendung zu zählen, ein Profil des zeitlichen Verlaufs eines oder mehrerer dieser Leistungsereignisse zu erstellen, wenn die Anwendung erwartungsgemäß und funktionell korrekt ausgeführt wird, und diese Profile als Referenzfingerabdruck für die Überwachung der Anwendung im laufenden Betrieb des Prozessors zu verwenden. Dazu werden während des laufenden Betriebs zeitliche Verläufe eines oder mehrerer der als Referenz verwendeten Leistungsereignisse aufgezeichnet und mit dem Referenzfingerabdruck abgeglichen. Sollten die zeitliche Verläufe während des Überwachungsbetriebs in vordefiniertem Maße von den Referenzverläufen abweichen, kann darauf geschlossen werden, dass die Anwendung nicht erwartungsgemäß und funktionell korrekt ausgeführt wird, so dass Gegenmaßnahmen eingeleitet werden können, um eine Aufrechterhaltung des korrekten Betriebs des Gesamtsystems im Allgemeinen bzw. der jeweils überwachten Anwendung im Speziellen gewährleisten zu können.

Insbesondere kann mit dem Prozessorsystem eine kontinuierliche Überwachung einiger oder aller laufenden Anwendungen implementiert werden, wodurch insbesondere für sicherheitsrelevante bzw. sicherheitskritische Anwendungen Sicherheitsanforderungsstufen in vorteilhafter Weise eingehalten werden können.

Ein weiterer Vorteil dieses Prozessorsystems liegt in der Möglichkeit, zeitliche Beeinflussungen konkurrierender Anwendungen auf Anwendungsprozessoren, insbesondere Mehrkernprozessoren, zeitnah erkennen zu können, damit ein unvorhersehbares Verhalten der gesamten Ausführungsumgebung durch die gegenseitige Beeinflussung der einzelnen Anwendungen rechtzeitig unterbunden werden kann.

Vorteilhafte Ausgestaltungen und Weiterbildungen ergeben sich aus den weiteren Unteransprüchen sowie aus der Beschreibung unter Bezugnahme auf die Figuren.

Gemäß einer Ausführungsform des Prozessorsystems kann der Anwendungsprozessor einen Mehrkernprozessor mit mindestens zwei Prozessorkernen aufweisen.

Gemäß einer weiteren Ausführungsform des Prozessorsystems können die Hardwareleistungszähler dazu ausgelegt sein, Speicherzugriffe, Pufferspeicherzugriffe und/oder die Anzahl ausgeführter Befehle zu zählen.

Gemäß einer weiteren Ausführungsform des Prozessorsystems kann die zu überwachende Anwendung eine sicherheitsrelevante Anwendung umfassen.

Gemäß einer weiteren Ausführungsform des Prozessorsystems kann die Datenschnittstelle eine Debug-Schnittstelle des Anwendungsprozessors sein.

Gemäß einer weiteren Ausführungsform des Prozessorsystems kann der Überwachungsprozessor ein FPGA sein, welcher dazu ausgelegt sein kann, den zeitlichen Verlauf der Zählerstände über das Aurora-Protokoll einzulesen.

Gemäß einer weiteren Ausführungsform des Prozessorsystems kann der Überwachungsprozessor dazu ausgelegt sein, die Sollwertleistungsprofile während eines oder mehrerer Referenzausführungsvorgänge der zu überwachenden Anwendung aufzuzeichnen und in der Nachschlagetabelle abzuspeichern.

Gemäß einer weiteren Ausführungsform des Prozessorsystems können in der Nachschlagetabelle Sollwertleistungsprofile des zeitlichen Verlaufs von Leistungsereignissen von mehreren der Vielzahl von Hardwareleistungszählern für mehrere auf dem Anwendungsprozessor auszuführende und zu überwachende Anwendungen gespeichert sein.

Gemäß einer weiteren Ausführungsform des Prozessorsystems können die mehreren auf dem Anwendungsprozessor auszuführenden und zu überwachenden Anwendungen sicherheitsrelevante und nicht-sicherheitsrelevante Anwendungen umfassen.

Gemäß einer Ausführungsform des Verfahrens kann das Verfahren weiterhin den Schritt des Aufzeichnens der Sollwertleistungsprofile während eines Referenzausführungsvorgangs der zu überwachenden Anwendung und Abspeichern der aufgezeichneten Sollwertleistungsprofile in der Nachschlagetabelle umfassen.

Gemäß einer weiteren Ausführungsform des Verfahrens können in der Nachschlagetabelle Sollwertleistungsprofile des zeitlichen Verlaufs von Leistungsereignissen von mehreren der Vielzahl von Hardwareleistungszählern für mehrere auf dem Anwendungsprozessor auszuführende und zu überwachende Anwendungen gespeichert sein.

Gemäß einer weiteren Ausführungsform des Verfahrens können die mehreren auf dem Anwendungsprozessor auszuführenden und zu überwachenden Anwendungen sicherheitsrelevante und nicht-sicherheitsrelevante Anwendungen umfassen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu derjeweiligen Grundform der vorliegenden Erfindung hinzufügen.

### KURZBESCHREIBUNG DER ZEICHNUNGEN

Die vorliegende Erfindung wird nachfolgend anhand der in den schematischen Figuren angegebenen Ausführungsbeispiele näher erläutert. Es zeigen dabei:
- Fig. 1: ein abstrahiertes Blockschaubild eines Prozessorsystems gemäß einer Ausführungsform der Erfindung;
- Fig. 2: ein detaillierteres Blockschaubild eines Prozessorsystems gemäß einer weiteren Ausführungsform der Erfindung; und
- Fig. 3: ein schematisiertes Ablaufdiagramm für ein Verfahren zur Überwachung eines Anwendungsprozessors gemäß noch einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### AUSFÜHRLICHE BESCHREIBUNG VON AUSFÜHRUNGSBEISPIELEN

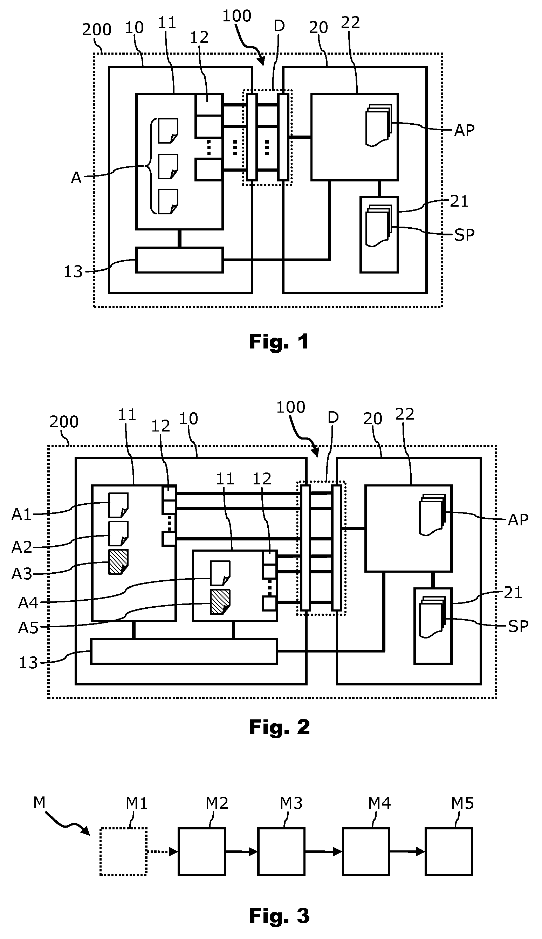

Fig. 1 zeigt ein abstrahiertes Blockschaubild eines Prozessorsystems 100 mit einem Anwendungsprozessor 10 und einem Überwachungsprozessor 20. Das Prozessorsystem 100 wird als in einem übergeordneten System 200 umfasst dargestellt. Das übergeordnete System 200 kann beispielsweise ein System sein, in welchem sicherheitsrelevante oder sicherheitskritische Anwendungen ausgeführt und überwacht werden müssen. Beispielsweise kann das übergeordnete System 200 ein Avioniksystem eines Flugzeugs sein, zum Beispiel ein Flugkontrollsystem, ein Flugsteuerungssystem, ein Navigationssystem, ein Flugzeugkommunikationssystem, ein Flugsensorsystem und/oder ein Flugmissionssystem. Selbstverständlich kann das übergeordnete System 200 auch in einem anderen Anwendungsbereich eingesetzt werden, beispielsweise in einem Straßenfahrzeug, einem Schienenfahrzeug, in der Prozessindustrie, in der Gebäudeautomatisierung, in der Feldsystemtechnik, in industriellen Fertigungs- oder Systemanlagen oder ähnlichem.

Der Anwendungsprozessor 10 weist mindestens einen Prozessorkern 11 auf, auf welchem bzw. für welchen eine Vielzahl von Hardwareleistungszähler 12 implementiert sind. Die Hardwareleistungszähler 12 ("hardware performance counters", HPCs) können dabei Leistungsindikatoren umfassen, die die Messung zahlreicher unterschiedlicher und zeitlicher aufgeschlüsselter Leistungsereignisse der überwachten Hardware ermöglichen, die mit dem Verhalten des Prozessorkerns 11 in Zusammenhang stehen. Zu derartigen Leistungsereignissen zählen beispielsweise Zugriffe auf Pufferspeicher, Zwischenspeicher oder andere Prozessorspeicher, die Anzahl von Anweisungsausführungen, fehlgeschlagene Speicherzugriffe, fehlgeschlagene Anweisungsausführungen sowie verschiedene interne Prozessorzustände. Die Hardwareleistungszähler 12 können dabei anwendungsspezifische Zählerdaten liefern, die bei der Analyse der jeweiligen auf dem Prozessorkern 11 ausgeführten Anwendungen A helfen können.

Die Daten der Hardwareleistungszähler 12 können dabei zeitlich und nach Datentyp aufgelöst über eine Datenschnittstelle D des Anwendungsprozessors 10 nach außen übertragen werden. Eine derartige Datenschnittstelle D kann beispielsweise eine Debug-Schnittstelle sein, auf die beispielsweise über das Aurora-Datenübertragungsprotokoll zugegriffen werden kann, d.h. eine Debug-Schnittstelle, die eine für die Überwachung erforderliche Bandbreite aufweist.

Der Überwachungsprozessor 20 des Prozessorsystems 100 ist über die Datenschnittstelle D mit dem Anwendungsprozessor 10 gekoppelt. Der Überwachungsprozessor 20 weist eine Auswertelogik 22 und eine mit der Auswertelogik 22 gekoppelte Nachschlagetabelle 21 ("look-up table", LUT) auf. Die Nachschlagetabelle 21 dient zur Speicherung von Sollwertleistungsprofilen SP des zeitlichen Verlaufs von Leistungsereignissen, die mit einem oder mehreren der Hardwareleistungszähler 12 aufgezeichnet werden können. Diese Sollwertleistungsprofile SP können beispielsweise in zweidimensionaler tabellarischer Form mit einer Zeitachse und einer Zählerstandsachse abgespeichert werden. Es kann jedoch auch möglich sein, die Sollwertleistungsprofile SP in statistisch aufbereiteter Form abzuspeichern, so dass beispielsweise statistische Vergleichsparameter wie etwa Medianwerte, gleitende Mittelwerte oder andere statistische Datenparameter im zeitlichen Verlauf abgespeichert werden. Zudem kann es auch möglich sein, die Sollwertleistungsprofile SP in Fragmenten abzuspeichern, die während der Auswertung gemäß der aktuellen Gegebenheiten zusammen gesetzt werden. Die Sollwertleistungsprofile SP sind dabei jeweils einer auf dem Anwendungsprozessor 10 auszuführenden und zu überwachenden Anwendung A zugeordnet.

Die Sollwertleistungsprofile SP können beispielsweise durch den Überwachungsprozessor 20 während eines oder mehrerer Referenzausführungsvorgangs/- vorgänge der zu überwachenden Anwendung(en) A aufgezeichnet werden. Dabei wird eine Ausführung der Anwendung(en) A auf dem Anwendungsprozessor 10 unter definierten Randbedingungen und unter externer Überwachung der Funktionstüchtigkeit der Anwendung(en) A vorgenommen. Insbesondere kann eine Anwendung im "Stand-alone"-Betrieb ausgeführt werden, das heißt, ohne Ausführung konkurrierender Anwendungen auf dem Anwendungsprozessor 10 zur gleichen Zeit. Die während eines derartigen Referenzausführungsvorgangs gewonnenen Sollwertleistungsprofile SP können durch den Überwachungsprozessor in der Nachschlagetabelle 21 abgelegt werden.

Die Auswertelogik 22 kann auf die in der Nachschlagetabelle 21 abgespeicherten Referenzwerte der Hardwareleistungszähler 12 zurückgreifen, um während eines realen Betriebes der Anwendung(en) A eine Überwachung zu ermöglichen. Die Überwachung erfordert dabei das Aufzeichnen in Echtzeit von entsprechenden zeitlichen Verläufen von Leistungsereignissen derjenigen der Vielzahl von Hardwareleistungszählern, mit denen die Sollwertleistungsprofile SP verglichen werden können. Ein derartiger Vergleich kann dabei beispielsweise mit statistischen Mitteln durchgeführt werden, indem statistische Parameter der zeitlichen Verläufe wie etwa zeitlich gleitende Mittelwerte, systematische zeitliche Verzögerungen, Abweichungen in der Varianz oder dergleichen miteinander verglichen werden und als abnormal klassifiziert werden, wenn vorgegebene Toleranzschwellen überschritten bzw. unterschritten werden. Es kann auch möglich sein, Sollwertleistungsprofile SP von verschiedenen Hardwareleistungszählern 12 mit den entsprechenden zeitlichen Verläufen im Realbetrieb gemeinsam zu evaluieren und erst dann eine abnormale Klassifikation zu treffen, wenn mehrere der Hardwareleistungszählern 12 zur gleichen Zeit in ihrer Abweichung von den Sollwertleistungsprofilen SP vorgegebene Toleranzschwellen überschreiten.

Verhalten sich die überwachten Anwendungen A nicht erwartungsgemäß, kann die Auswertelogik 22 selbst oder eine entsprechende (nicht explizit dargestellte) Komponente im Überwachungsprozessor 20 auf Anforderung der Auswertelogik 22 ein Steuersignal an eine Prozessorsteuerung 13 im Anwendungsprozessor 10 ausgeben, welches im überwachten System Gegenmaßnahmen einleitet. Beispielweise kann die Prozessorsteuerung 13 im Anwendungsprozessor 10 einen der Prozessorkerne 11 drosseln oder temporär abschalten. Es kann auch möglich sein, den gesamten Anwendungsprozessor 10 oder zumindest ausgewählte der konkurrierenden Anwendungen A zurückzusetzen und neu zu starten.

Fig. 2 zeigt ein Blockschaubild eines Prozessorsystems 100 mit einem Anwendungsprozessor 10 und einem Überwachungsprozessor 20, welches gegenüber dem Prozessorsystem 100 der Fig. 1 einen höheren Detailgrad aufweist. Generell können etliche oder alle der Eigenschaften, Funktionen und Betriebsparameter, die im Zusammenhang mit den Komponenten der Fig. 1 erläutert worden sind, in analoger Weise auch auf die entsprechenden Komponenten des Prozessorsystems der Fig. 2 übertragen werden. Sowohl das Prozessorsystem der Fig. 1 als auch das Prozessorsystem der Fig. 2 können von dem Verfahren zur Überwachung eines Anwendungsprozessors Gebrauch machen.

Das Prozessorsystem 100 der Fig. 2 kann beispielsweise einen Mehrkernprozessor 10 ("multicore processor", MCP) aufweisen, welcher mehr als einen vollständigen Hauptprozessorkern in einem einzigen Chip aufweist. In einem derartigen MCP 10 können einige oder alle der Ressourcen, wie etwa Puffer, Busse oder Caches doppelt oder mehrfach implementiert werden, so dass die einzelnen Prozessorkerne vollständige und weitgehend unabhängig voneinander operierende Rechenkerne mit eigenen Registersätzen und arithmetisch-logischen Einheiten darstellen. Der MCP 10 kann dabei ein homogener oder heterogener MCP 10 sein.

Der MCP 10 kann insbesondere Prozessorkerne 11 aufweisen, auf denen Anwendungen ausgeführt werden, die teilweise sicherheitsrelevant und teilweise nichtsicherheitsrelevant sind. In dem in Fig. 2 dargestellten Beispiel sind die Anwendungen A1 und A2 auf dem ersten (links dargestellten) Prozessorkern 11 und die Anwendung A4 auf dem zweiten (rechts dargestellten) Prozessorkern 11 nicht-sicherheitsrelevante Anwendungen. Die Anwendungen A3 und A5 hingegen können beispielsweise sicherheitsrelevante Anwendungen sein.

Der MCP 10 kann zum Beispiel ein Dualcore-Prozessor sein, wie etwa ein NXP P5020. Der Überwachungsprozessor 20 kann beispielweise als FPGA implementiert werden, dessen Auswertelogik 22 in einem integrierten Prozessor, zum Beispiel einem Softcore- oder Hardcore-Prozessor, implementiert werden kann. Der Überwachungsprozessor 20, zum Beispiel ein FPGA, könnte zum Beispiel über das Aurora-Datenübertragungsprotokoll an eine Debug-Schnittstelle D des Anwendungsprozessors 10 angekoppelt werden. Durch die Anbindung an eine Debug-Schnittstelle D wird eine störende Beeinflussung des Betriebs des Anwendungsprozessors 10 durch den Betrieb des Überwachungsprozessors 20 vorteilhafterweise vermieden.

Fig. 3 zeigt ein schematisiertes Ablaufdiagramm für ein Verfahren M zur Überwachung eines Anwendungsprozessors. Das Verfahren M kann beispielsweise unter Nutzung eines Prozessorsystems implementiert werden, beispielsweise eines Prozessorsystems 100 einer der Fig. 1 und 2. Das Verfahren M kann zum Beispiel in einem Avioniksystem eines Flugzeugs eingesetzt werden, beispielsweise zur Überwachung von Prozessoren in Flugkontrollsystemen, Flugsteuerungssystemen, Navigationssystemen, Flugzeugkommunikationssystemen, Flugsensorsystemen und/oder Flugmissionssystemen.

Optional erfolgt in einem vorbereitenden Schritt M1 des Verfahrens M ein Aufzeichnen von Sollwertleistungsprofilen SP während eines oder mehrerer Referenzausführungsvorgangs/-vorgängen einer zu überwachenden Anwendung A auf einem Anwendungsprozessor 10 eines Prozessorsystems 100. Diese Sollwertleistungsprofile SP können in einer Nachschlagetabelle 21 eines Überwachungsprozessors 20 abgespeichert werden. In der Nachschlagetabelle 21 können dabei beispielsweise Sollwertleistungsprofile SP des zeitlichen Verlaufs von Leistungsereignissen von mehreren einer Vielzahl von Hardwareleistungszählern 12 für mehrere auf dem Anwendungsprozessor 10 auszuführende und zu überwachende Anwendungen A gespeichert werden.

In einem Schritt M2 wird dann mindestens eine zu überwachende Anwendung A auf dem Anwendungsprozessor 10 ausgeführt, welcher mindestens einen Prozessorkern 11 aufweist. Der Anwendungsprozessor 10 kann in manchen Ausführungsformen auch mehrere Prozessorkerne 11 aufweisen. In einem Schritt M3 erfolgt ein Aufzeichnen des zeitlichen Verlaufs von Leistungsereignissen AP für die mindestens eine zu überwachende Anwendung A mit der Vielzahl von Hardwareleistungszählern 12, die in dem Anwendungsprozessor 10 für die verschiedenen Prozessorkerne 11 implementiert sind. Die aufgezeichneten zeitlichen Verläufe von Leistungsereignissen AP werden in Schritt M4 dann an einen Überwachungsprozessor 20 übertragen.

Schließlich werden die aufgezeichneten zeitlichen Verläufe von Leistungsereignissen AP des mindestens einen der Vielzahl von Hardwareleistungszählern 12 während der Ausführung der zu überwachenden Anwendung A mit den Sollwertleistungsprofilen SP des zeitlichen Verlaufs von Leistungsereignissen mindestens eines der Vielzahl von Hardwareleistungszählern 12 verglichen. Beispielsweise kann das Vergleichen selektiv für mehrere auf dem Anwendungsprozessor 10 auszuführende und zu überwachende Anwendungen A vorgenommen werden. Beispielsweise kann dabei zwischen sicherheitsrelevanten und nicht-sicherheitsrelevanten Anwendungen unterschieden werden.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

Ohne explizite Angabe des Gegenteils sollen Artikel wie etwa "ein", "eine" oder "eines" im Allgemeinen so verstanden werden, ein oder mehrere der beschriebenen Gegenstände gemeint sind. Demgemäß sollen Wendungen wie "eine Vorrichtung, welche dazu ausgelegt ist" ein oder mehrere solch angegebener Vorrichtungen mit einschließen. Derartig angegebene ein oder mehrere Vorrichtungen können die angegebenen Ausführungen in Zusammenwirkung ausführen. Beispielsweise kann die Angabe eines "Prozessors, der dazu ausgelegt ist, die Angaben A, B und C auszuführen" auch einen ersten Prozessor, welcher die Angabe A ausführt, in Zusammenwirkung mit einem zweiten Prozessor, welcher die Angaben B und C ausführt, mit einschließen.

### LISTE DER BEZUGSZEICHEN

- 10: Anwendungsprozessor
- 11: Prozessorkern
- 12: Hardwareleistungszähler
- 13: Anwendungsprozessorsteuerung
- 20: Überwachungsprozessor
- 21: Nachschlagetabelle
- 22: Auswertelogik
- 100: Prozessorsystem
- 200: Avioniksystem
- A: Anwendung
- A1: Anwendung
- A2: Anwendung
- A3: Anwendung
- A4: Anwendung
- A5: Anwendung
- AP: Anwendungsleistungsprofile
- D: Datenübertragungsschnittstelle
- M: Verfahren
- M1: Verfahrensschritt
- M2: Verfahrensschritt
- M3: Verfahrensschritt
- M4: Verfahrensschritt
- M5: Verfahrensschritt
- SP: Sollwertleistungsprofile

## Patentansprüche

1. Prozessorsystem (100), mit:
mindestens einem Anwendungsprozessor (10), welcher mindestens einen Prozessorkern (11) und eine Vielzahl von Hardwareleistungszählern (12) aufweist; und
einem Überwachungsprozessor (20), welcher mit dem mindestens einem Anwendungsprozessor (10) über eine Datenübertragungsschnittstelle (D) gekoppelt ist, und welcher aufweist:
eine Nachschlagetabelle (21), in welcher Sollwertleistungsprofile (SP) des zeitlichen Verlaufs von Leistungsereignissen mindestens eines der Vielzahl von Hardwareleistungszählern (12) für eine auf dem mindestens einem Anwendungsprozessor (10) auszuführende und zu überwachende Anwendung (A) gespeichert sind, und
eine Auswertelogik (22), welche mit der Nachschlagetabelle (21) verbunden und dazu ausgelegt ist, den zeitlichen Verlauf von Leistungsereignissen (AP) des mindestens einen der Vielzahl von Hardwareleistungszählern (12) während der Ausführung der zu überwachenden Anwendung (A) auf dem mindestens einen Anwendungsprozessor (10) aufzuzeichnen und mit den in der Nachschlagetabelle (21) gespeicherten Sollwertleistungsprofilen (SP) zu vergleichen.

2. Prozessorsystem (100) nach Anspruch 1, wobei der Anwendungsprozessor (10) einen Mehrkernprozessor mit mindestens zwei Prozessorkernen (11) aufweist.

3. Prozessorsystem (100) nach einem der Ansprüche 1 und 2, wobei die Hardwareleistungszähler (12) dazu ausgelegt sind, Speicherzugriffe, Pufferspeicherzugriffe und/oder die Anzahl ausgeführter Befehle zu zählen.

4. Prozessorsystem (100) nach einem der Ansprüche 1 bis 3, wobei die zu überwachende Anwendung (A) eine sicherheitsrelevante Anwendung umfasst.

5. Prozessorsystem (100) nach einem der Ansprüche 1 bis 4, wobei die Datenschnittstelle (D) eine Debug-Schnittstelle des Anwendungsprozessors (10) ist.

6. Prozessorsystem (100) nach Anspruch 5, wobei der Überwachungsprozessor (20) ein FPGA ist, welcher dazu ausgelegt ist, den zeitlichen Verlauf der Zählerstände (AP) über das Aurora-Protokoll einzulesen.

7. Prozessorsystem (100) nach einem der Ansprüche 1 bis 6, wobei der Überwachungsprozessor (20) dazu ausgelegt ist, die Sollwertleistungsprofile (SP) während eines Referenzausführungsvorgangs der zu überwachenden Anwendung (A) aufzuzeichnen und in der Nachschlagetabelle (21) abzuspeichern.

8. Prozessorsystem (100) nach einem der Ansprüche 1 bis 7, wobei in der Nachschlagetabelle (21) Sollwertleistungsprofile (SP) des zeitlichen Verlaufs von Leistungsereignissen von mehreren der Vielzahl von Hardwareleistungszählern (12) für mehrere auf dem Anwendungsprozessor (10) auszuführende und zu überwachende Anwendungen (A) gespeichert sind.

9. Prozessorsystem (100) nach Anspruch 8, wobei die mehreren auf dem Anwendungsprozessor (10) auszuführenden und zu überwachenden Anwendungen (A) sicherheitsrelevante und nicht-sicherheitsrelevante Anwendungen umfassen.

10. Avioniksystem (200) für ein Flugzeug (A), mit mindestens einem Prozessorsystem (100) nach einem der Ansprüche 1 bis 9.

11. Avioniksystem (200) nach Anspruch 10,
wobei das Avioniksystem (200) ein Flugkontrollsystem, ein Flugteuerungssystem, ein Navigationssystem, ein Flugzeugkommunikationssystem, ein Flugsensorsystem und/oder ein Flugmissionssystem umfasst.

12. Verfahren (M) zum Überwachen eines Anwendungsprozessors (10), umfassend:
Ausführen (M2) von mindestens einer zu überwachenden Anwendung (A) auf einem Anwendungsprozessor (10), welcher mindestens einen Prozessorkern (11) aufweist;
Aufzeichnen (M3) des zeitlichen Verlaufs von Leistungsereignissen (AP) für die mindestens eine zu überwachenden Anwendung (A) mit einer Vielzahl von Hardwareleistungszählern (12);
Übertragen (M4) der aufgezeichneten zeitlichen Verläufe von Leistungsereignissen (AP) an einen Überwachungsprozessor (20); und
Vergleichen (M5) des aufgezeichneten zeitlichen Verlaufs von Leistungsereignissen (AP) des mindestens einen der Vielzahl von Hardwareleistungszählern (12) während der Ausführung der zu überwachenden Anwendung (A) mit in einer Nachschlagetabelle (21) des Überwachungsprozessors (20) gespeicherten Sollwertleistungsprofile (SP) des zeitlichen Verlaufs von Leistungsereignissen mindestens eines der Vielzahl von Hardwareleistungszählern (12).

13. Verfahren (M) nach Anspruch 12, weiterhin umfassend:
Aufzeichnen (M1) der Sollwertleistungsprofile (SP) während eines Referenzausführungsvorgangs der zu überwachenden Anwendung (A) und Abspeichern der aufgezeichneten Sollwertleistungsprofile (SP) in der Nachschlagetabelle (21).

14. Verfahren (M) nach einem der Ansprüche 12 und 13, wobei in der Nachschlagetabelle (21) Sollwertleistungsprofile (SP) des zeitlichen Verlaufs von Leistungsereignissen von mehreren der Vielzahl von Hardwareleistungszählern (12) für mehrere auf dem Anwendungsprozessor (10) auszuführende und zu überwachende Anwendungen (A) gespeichert sind.

15. Verfahren (M) nach Anspruch 14, wobei die mehreren auf dem Anwendungsprozessor (10) auszuführenden und zu überwachenden Anwendungen (A) sicherheitsrelevante und nicht-sicherheitsrelevante Anwendungen umfassen.
